# EUROPEAN PATENT SPECIFICATION

(11) **EP 3 958 206 B1**
(45) Date of publication and mention of the grant of the patent: **08.11.2023**
(21) Application number: 20842947.2
(22) Date of filing: 09.06.2020
(51) Int. Cl.: G06Q 50/30, G06Q 10/02, G07B 15/04, H04W 4/029, H04W 12/06

(54) **TICKET SYSTEM AND TICKET MANAGEMENT METHOD**
TICKETSYSTEM UND TICKETVERWALTUNGSVERFAHREN
SYSTÈME DE BILLETS ET PROCÉDÉ DE GESTION DE BILLETS

(30) Priority: 23.07.2019 JP 2019135375
(43) Date of publication of application: 23.02.2022
(73) Proprietor: Hitachi, Ltd., Tokyo 100-8280 (JP)
(72) Inventor: MIZUKAWA, Hideo, Tokyo 100-8280 (JP); MOCHIZUKI, Tomoyuki, Tokyo 100-8280 (JP)
(74) Representative: Manitz Finsterwald Patent- und Rechtsanwaltspartnerschaft mbB
(86) International application number: PCT/JP2020/022745
(87) International publication number: WO 2021/014806

(56) References cited:
- WO-A1-2018/074504
- GB-A- 2 246 896
- JP-A- 2002 222 441
- JP-A- 2002 293 240
- JP-A- 2005 018 307
- JP-A- 2016 071 441
- US-A1- 2018 293 523

## Description

### Technical Field

The present invention relates to a ticket system that manages an electronic ticket for using transportation facilities such as trains.

### Background Art

US 2018/0293523 A1 discloses a method in a control unit associated with a transit system, the method comprising receiving plural sensor data for obtaining passenger data for analysis.

GB 2246896 A discloses a ticket system with a ticket having a transceiver and with a positioned transmitter that transmits position data to the ticket.

The digitization of tickets for using transportation facilities such as trains has been progressing, and there is a demand for an improvement in efficiency of ticket examination operations in trains.

The following related arts are described as a background art in the present technical field. PTL 1 (US Pat. No. 9996831) discloses a system for enabling a wireless mobile device a vehicle to be automatically detected and used as a ticket in a transportation and/or shipping system, in which the wireless mobile device is detected, a unique identifier of the wireless mobile device is used to track the entry and exit of a user, a fare payment is displayed on the wireless mobile device, the user is allowed to use the wireless mobile device to show proof of payment when requested at ticket inspection, and a fare can be calculated and paid for in a variety of methods.

### Technical Problem

The invention is defined by the appended claims. In the ticket system described in the related art, the number of passengers in the vehicle is compared with the number of passengers detected using a mobile wireless terminal, and when a difference therebetween exceeds a threshold value, the difference is notified to a ticket inspection staff. However, the system determines a place to inspect a ticket by comparing the number of passengers and the number of terminals, and does not specify a place where there are many persons who are highly likely to get on illegally. The efficiency of the ticket inspection work by the ticket inspection staff is not considered by specifying a person who is highly likely to get on illegally and notifying the ticket inspection staff.

### Summary of Invention

It is the object of the invention to render a ticket system and a ticket management method capable of providing information on a place where tickets are supposed to be inspected based on the reliability of each passenger.

### Solution to Problem

The above object is accomplished by the features of the independent claims.

A ticket system used when a passenger rides a vehicle includes: a position beacon installed in a moving body on which a passenger rides; a passenger terminal used by a passenger; a ticket inspection terminal used by a ticket inspection staff; and a server connected to the passenger terminal and the ticket inspection terminal, in which the passenger terminal is configured to detect the position beacon, and the server is configured to manage an identifier of the position beacon detected by the passenger terminal in association with an identifier of the passenger terminal, manage a place of the ticket inspection terminal based on a correspondence relationship between the identifier of the position beacon installed in the moving body and the identifier of the ticket inspection terminal, manage a temporal change in a state and a place of the passenger terminal as a riding state transition based on a correspondence relationship between the identifier of the position beacon and the identifier of the passenger terminal, and update a reliability of a passenger who uses a passenger terminal near the ticket inspection terminal based on a position of the ticket inspection terminal during the riding state transition.

### Advantageous Effect

According to the invention, it is possible to improve the efficiency of a ticket inspection work in a vehicle. Problems, configurations, and effects other than those described above will be further clarified with the following description of embodiments.

### Brief Description of Drawings

[FIG. 1] FIG. 1 is a diagram showing a ticket system according to an embodiment of the invention.
[FIG. 2] FIG. 2 is a configuration diagram of hardware and software of a passenger terminal.
[FIG. 3] FIG. 3 is a configuration diagram of hardware and software of a ticket inspection terminal.
[FIG. 4] FIG. 4 is a configuration diagram of hardware and software of a server.
[FIG. 5] FIG. 5 is a diagram showing a configuration example of beacon management information.
[FIG. 6] FIG. 6 is a diagram showing a configuration example of user information.
[FIG. 7] FIG. 7 is a diagram showing a configuration example of position beacon information.
[FIG. 8] FIG. 8 is a flowchart of position beacon information creation processing.
[FIG. 9] FIG. 9 is a flowchart of passenger reliability calculation processing.
[FIG. 10] FIG. 10 is a diagram showing a configuration example of riding state transition information.
[FIG. 11] FIG. 11 is a diagram showing a configuration example of riding state information.
[FIG. 12] FIG. 12 is a diagram showing a configuration example of route information.
[FIG. 13] FIG. 13 is a diagram showing a configuration example of moving body travel record information.
[FIG. 14] FIG. 14 is a diagram showing a configuration example of a passenger reliability update history.
[FIG. 15] FIG. 15 is a diagram showing a configuration example of passenger movement history information.
[FIG. 16] FIG. 16 is a diagram showing a configuration example of ticket information.
[FIG. 17] FIG. 17 is a diagram showing a configuration example of a riding state transition update table.
[FIG. 18] FIG. 18 is a diagram showing a configuration example of a riding state transition update table.
[FIG. 19] FIG. 19 is a flowchart of passenger reliability update processing.
[FIG. 20] FIG. 20 is a flowchart of passenger reliability subtraction processing.
[FIG. 21] FIG. 21 is a sequence diagram of recommended ticket inspection position presentation processing.
[FIG. 22] FIG. 22 is a diagram showing an example of a recommended ticket inspection position display screen.
[FIG. 23] FIG. 23 is a diagram showing an example of a recommended ticket inspection position display screen.
[FIG. 24] FIG. 24 is a flowchart of ticket inspection support information presentation processing.
[FIG. 25] FIG. 25 is a diagram showing an example of a ticket inspection support information screen.

### Description of Embodiments

Hereinafter, embodiments of the invention will be described with reference to the drawings. In the present embodiment, a passenger who moves on a train will be described, but the invention can also be applied to other public transportation facilities (moving bodies such as buses, ships, and trams).

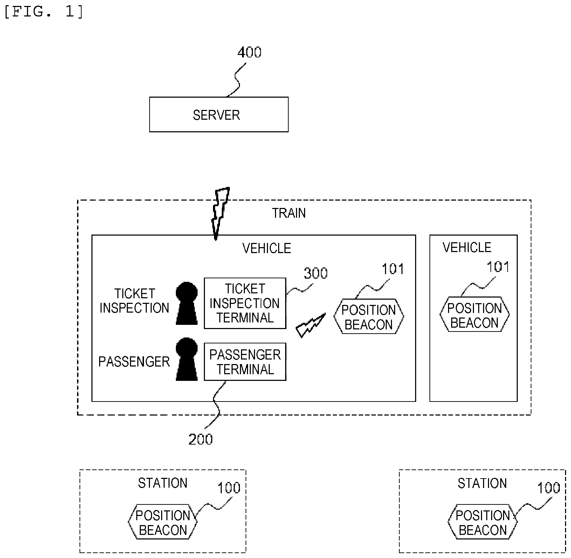

FIG. 1 is a diagram showing a ticket system according to the embodiment of the invention.

The ticket system according to the present embodiment includes position beacons 100 and 101 installed in a station and a vehicle, a passenger terminal 200 used by a passenger, a ticket inspection terminal 300 used by a ticket inspection staff, and a server 400 capable of communicating with the passenger terminal 200 and the ticket inspection terminal 300.

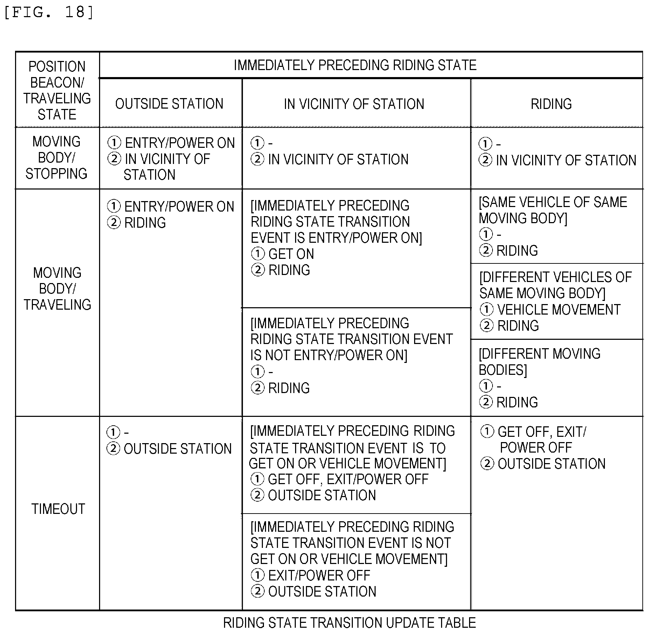

The position beacons 100 and 101 are wireless transmitters that transmit predetermined wireless signals used by the passenger terminal 200 and the ticket inspection terminal 300 to specify positions, and a short-range wireless communication system such as WiFi (wireless LAN) or Bluetooth (WiFi, Bluetooth is a registered trademark) can be used. The position beacon 100 is installed at a station, and is preferably installed at a place where riding and getting off the train can be specified, such as a riding place of the train (for example, a platform on which the train arrives and departs) or a traffic line of the passenger. The position beacon 101 is installed in the train, and may be installed (for example, one or more position beacons 101 may be installed for each vehicle) such that a vehicle can be specified. The passenger terminal 200 and the ticket inspection terminal 300 may specify the position by using another position specifying method (for example, high-precision GNSS) without installing a beacon. Further, when a riding state transition update table shown in FIG. 18 is used, only the position beacon 101 may be installed in the train without installing the position beacon 100 in the station.

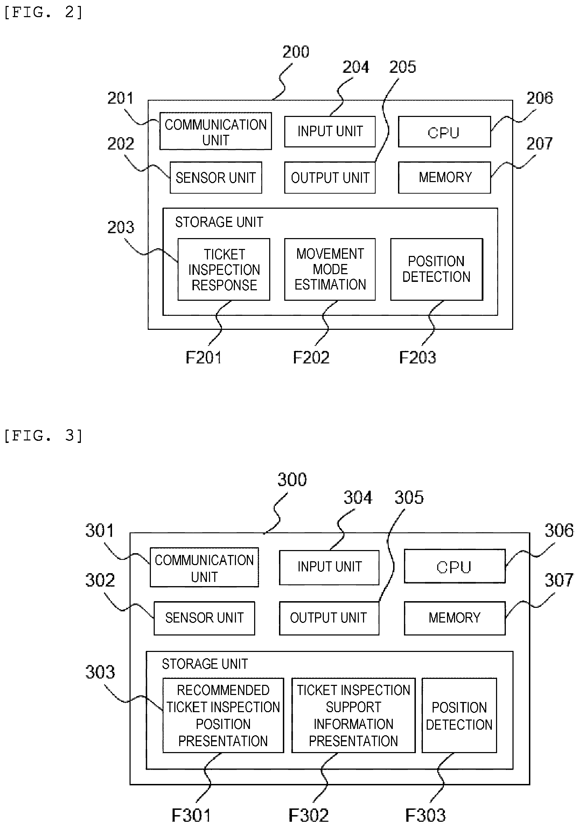

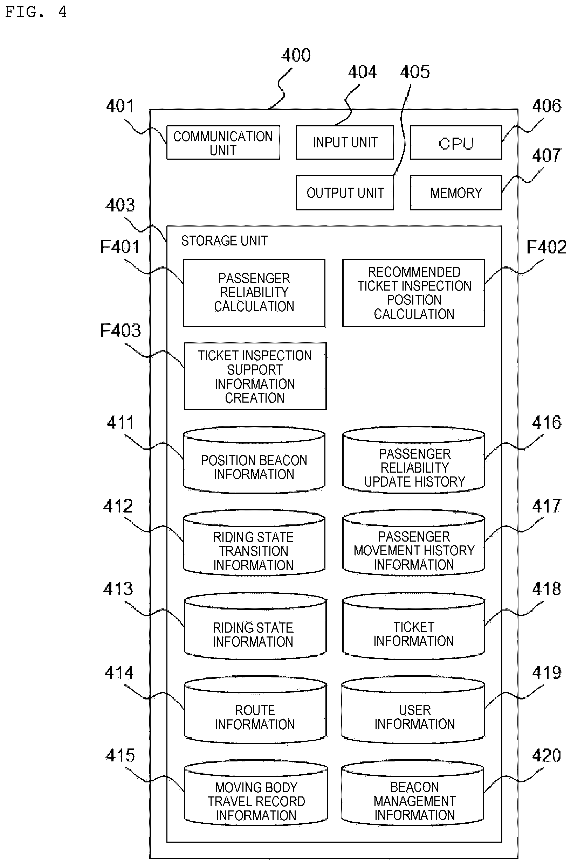

The passenger terminal 200 is a wireless communication terminal used by a passenger who rides on a train using the ticket system, and details thereof will be described later with reference to FIG. 2. The ticket inspection terminal 300 is a wireless communication terminal used by a train crew (ticket inspection staff) of the train, and details thereof will be described later with reference to FIG. 3. The server 400 is a computer capable of communicating with the passenger terminal 200 and the ticket inspection terminal 300, collects information of the passenger terminal 200, and provides the information of the passenger terminal 200 in accordance with a request from the ticket inspection terminal 300. A configuration of the server 400 will be described later with reference to FIG. 4.

FIG. 2 is a configuration diagram of hardware and software of the passenger terminal 200.

The passenger terminal 200 is a wireless communication terminal including a communication unit 201, a sensor unit 202, a storage unit 203, an input unit 204, an output unit 205, a processor (CPU) 206, and a memory 207, and can be implemented by, for example, a smartphone capable of communicating with the server 400 via WiFi (wireless LAN) or a mobile phone network (LTE) .

The processor 206 is an arithmetic device that executes a program stored in the memory 207 and executes arithmetic processing. The processor 206 executes various programs to implement various functions of the passenger terminal 200. A part of the processing performed by the processor 206 executing the program may be executed by another arithmetic device (for example, an arithmetic device by hardware such as an FPGA or an ASIC).

The memory 207 includes a ROM, which is a nonvolatile storage element, and a RAM, which is a volatile storage element. The ROM stores an invariable program (for example, a BIOS) and the like. The RAM is a high-speed volatile storage element such as a DRAM, and temporarily stores a program to be executed by the processor 206 and data to be used when the program is executed.

The storage unit 203 is implemented by, for example, a large-capacity and non-volatile storage device such as a flash memory (SSD) . The storage unit 203 stores data used when the processor 206 executes the program, and programs to be executed by the processor 206 (for example, a ticket inspection response processing program, a movement mode estimation program, a position detection program, and the like). That is, the program is read from the storage unit 203, loaded into the memory 207, and executed by the processor 206, thereby implementing each function of the passenger terminal 200.

The sensor unit 202 includes an acceleration sensor used for estimating the movement mode. The sensor unit 202 may be implemented by a magnetic sensor or a motion sensor in addition to the acceleration sensor.

The communication unit 201 is a network interface device that controls wireless communication with another device in accordance with a predetermined protocol.

The input unit 204 is implemented by an input device such as a touch panel, and is an interface that receives input from the passenger.

The output unit 205 is implemented by a display device such as a liquid crystal display device, and is an interface that outputs an execution result of the program in a format that can be visually recognized by the passenger.

A ticket inspection response processing function F201 executes processing for a ticket inspection request beacon from the ticket inspection terminal 300. A movement mode estimation function F202 estimates a moving unit of the passenger terminal 200 (that is, the passenger who uses the passenger terminal 200) by using a detection result of the acceleration sensor of the sensor unit 202. A position detection function F203 receives signals from the position beacons 100 and 101 and detects the position of the passenger terminal 200. The passenger terminal 200 may detect the position using a satellite positioning system (GNSS) without using the position beacons 100 and 101.

In the following description, activation (power ON) and termination (power OFF) of the passenger terminal 200 are, for example, activation and termination of an application executed by a smartphone which is the passenger terminal 200, and are not activation and termination of the smartphone itself.

FIG. 3 is a configuration diagram of hardware and software of the ticket inspection terminal 300.

The ticket inspection terminal 300 is a wireless communication terminal including a communication unit 301, a sensor unit 302, a storage unit 303, an input unit 304, an output unit 305, a processor (CPU) 306, and a memory 307, and can be implemented by, for example, a dedicated terminal or a smartphone capable of communicating with the server 400 via WiFi (wireless LAN) or a mobile phone network (LTE).

The processor 306 is an arithmetic device that executes a program stored in the memory 307 and executes arithmetic processing. The processor 306 executes various programs to implement various functions of the ticket inspection terminal 300. A part of the processing performed by the processor 306 executing the program may be executed by another arithmetic device (for example, an arithmetic device by hardware such as an FPGA or an ASIC).

The memory 307 includes a ROM, which is a nonvolatile storage element, and a RAM, which is a volatile storage element. The ROM stores an invariable program (for example, a BIOS) and the like. The RAM is a high-speed volatile storage element such as a DRAM, and temporarily stores a program to be executed by the processor 306 and data to be used when the program is executed.

The storage unit 303 is implemented by, for example, a large-capacity and non-volatile storage device such as a flash memory (SSD). The storage unit 303 stores data used when the processor 306 executes the program, and programs executed by the processor 306 (for example, a recommended ticket inspection position presentation program, a ticket inspection support information presentation program, a position detection program, and the like).

That is, the program is read from the storage unit 303, loaded into the memory 307, and executed by the processor 306, thereby implementing each function of the ticket inspection terminal 300.

The sensor unit 302 includes an acceleration sensor used for estimating the movement mode. The sensor unit 302 may be implemented by a magnetic sensor or a motion sensor in addition to the acceleration sensor. Since the ticket inspection terminal 300 does not need to estimate the movement mode, the sensor unit 302 may be omitted.

The communication unit 301 is a network interface device that controls wireless communication with another device in accordance with a predetermined protocol.

The input unit 304 is implemented by an input device such as a touch panel, and is an interface that receives input from the ticket inspection staff.

The output unit 305 is implemented by a display device such as a liquid crystal display device, and is an interface that outputs an execution result of the program in a format that can be visually recognized by the ticket inspection staff.

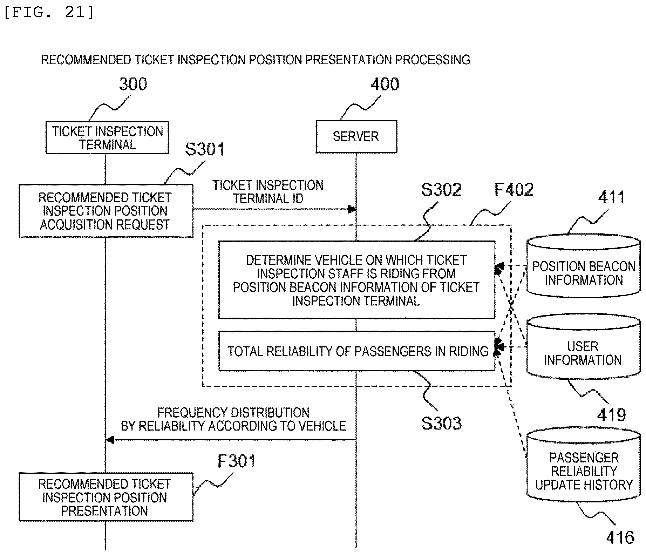

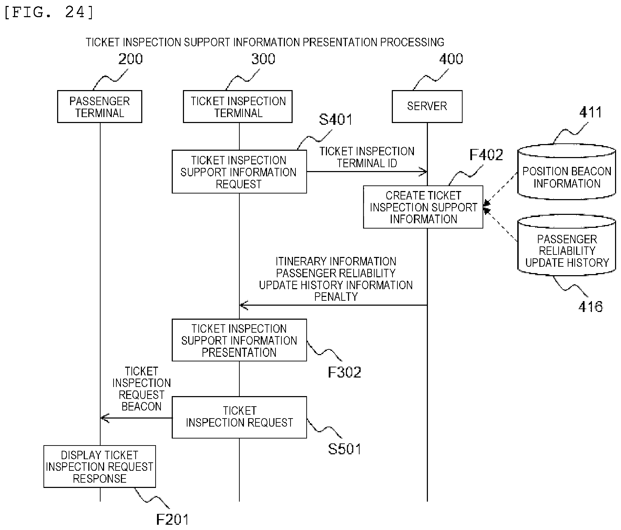

A recommended ticket inspection position presentation function F301 executes processing in the ticket inspection terminal 300 of recommended ticket inspection position presentation processing (see FIG. 21). A ticket inspection support information presentation function F302 executes processing in the ticket inspection terminal 300 of ticket inspection support information presentation processing (see FIG. 24). A position detection function F303 receives signals from the position beacons 100 and 101 and detects the position of the ticket inspection terminal 300. The ticket inspection terminal 300 may detect the position using a satellite positioning system (GNSS) or may detect the position by the ticket inspection staff inputting the vehicle in the ticket inspection work, without using the position beacons 100 and 101.

The position detection function F303 has a function of specifying the position of the ticket inspection terminal 300, but the position detection function F303 may not be provided if a function of specifying a vehicle in the ticket inspection and changing a decrease width of the passenger reliability, which will be described later, is omitted.

Further, the ticket inspection terminal 300 has a function of transmitting a beacon to the passenger terminal 200.

FIG. 4 is a configuration diagram of hardware and software of the server 400.

The server 400 is implemented by a computer including a communication unit 401, a storage unit 403, an input unit 404, an output unit 405, a processor (CPU) 406, and a memory 407.

The processor 406 is an arithmetic device that executes a program (arithmetic processing) stored in the memory 407. The processor 406 executes various programs to implement various functions of the server 400. A part of the processing performed by the processor 406 executing the program may be executed by another arithmetic device (for example, an arithmetic device by hardware such as an FPGA or an ASIC).

The memory 407 includes a ROM, which is a nonvolatile storage element, and a RAM, which is a volatile storage element. The ROM stores an invariable program (for example, a BIOS) and the like. The RAM is a high-speed volatile storage element such as a DRAM, and temporarily stores a program to be executed by the processor 406 and data to be used when the program is executed.

The storage unit 403 is implemented by, for example, a large-capacity and non-volatile storage device such as a magnetic storage device (HDD) or a flash memory (SSD). The storage unit 403 stores data (for example, position beacon information 411, riding state transition information 412, riding state information 413, route information 414, moving body travel record information 415, passenger reliability update history 416, passenger movement history information 417, ticket information 418, user information 419, beacon management information 420, and the like) used when the processor 406 executes the program, and programs (for example, a passenger reliability calculation program, a recommended ticket inspection position calculation program, a ticket inspection support information creation program, and the like) executed by the processor 406. That is, the program is read from the storage unit 403, loaded into the memory 407, and executed by the processor 406, thereby implementing each function of the server 400.

The communication unit 401 is a network interface device that controls communication with other devices in accordance with a predetermined protocol.

The input unit 404 is implemented by an input device such as a keyboard or a mouse, and is an interface that receives input from an operator. The output unit 405 is implemented by a display device, a printer, and the like, and is an interface that outputs an execution result of a program in a format that can be visually recognized by the operator. A terminal connected to the server 400 via a network may provide the input unit 404 and the output unit 405.

The program executed by the processor 406 is provided to the server 400 via a removable medium (CD-ROM, flash memory, and the like) or a network, and is stored in the non-volatile storage unit 403 which is a non-transitory storage medium. Therefore, the server 400 may have an interface for reading data from the removable medium.

The server 400 may be a computer system formed by one physical computer or by a plurality of logical or physical computers, or may be operated on a virtual computer constructed on a plurality of physical computer resources.

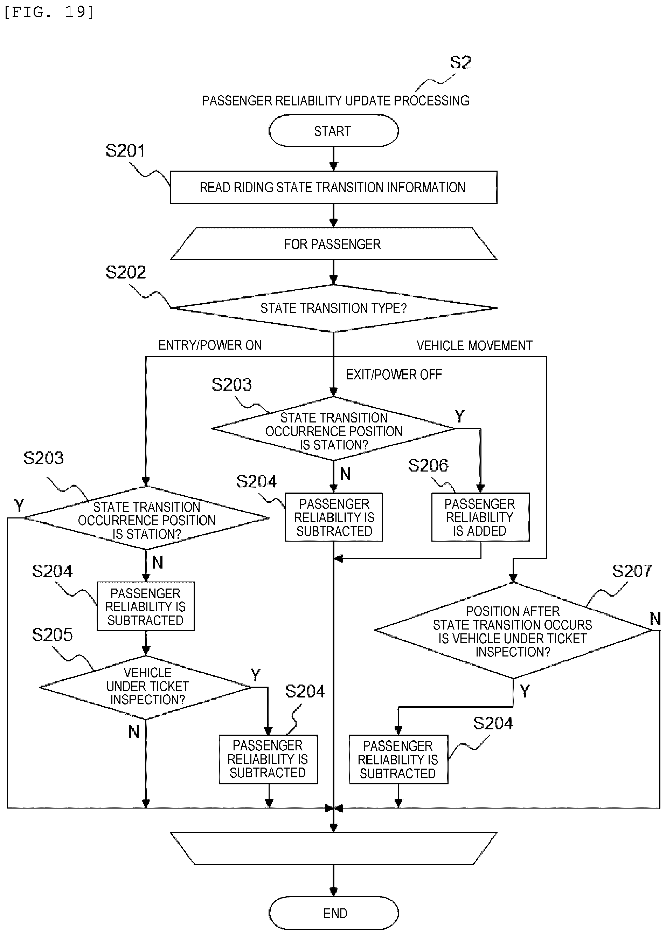

A passenger reliability calculation function F401 executes passenger reliability update processing (see FIG. 19) . Recommended ticket inspection position calculation F402 executes processing in the server 400 of the recommended ticket inspection position presentation processing (see FIG. 21). Ticket inspection support information creation F403 executes processing in the server 400 of the ticket inspection support information presentation processing (see FIG. 24).

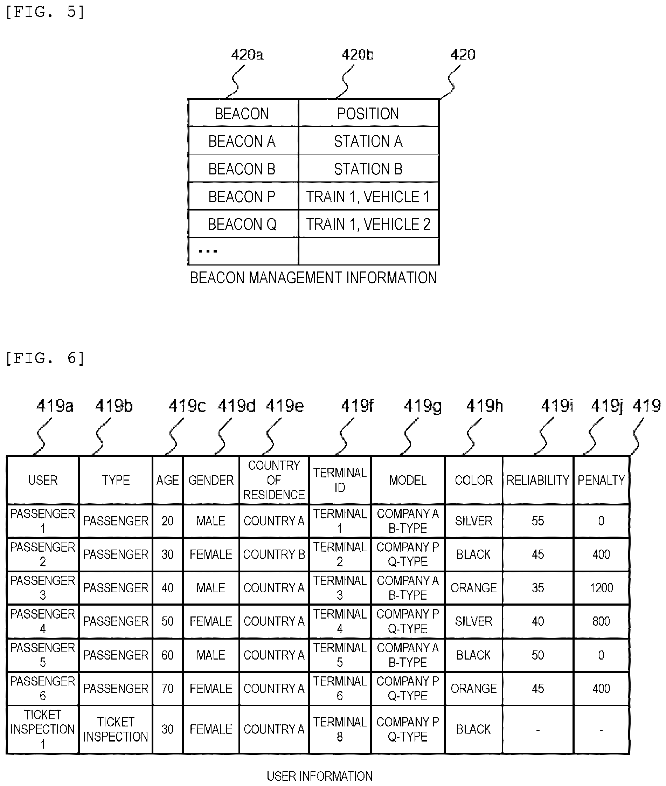

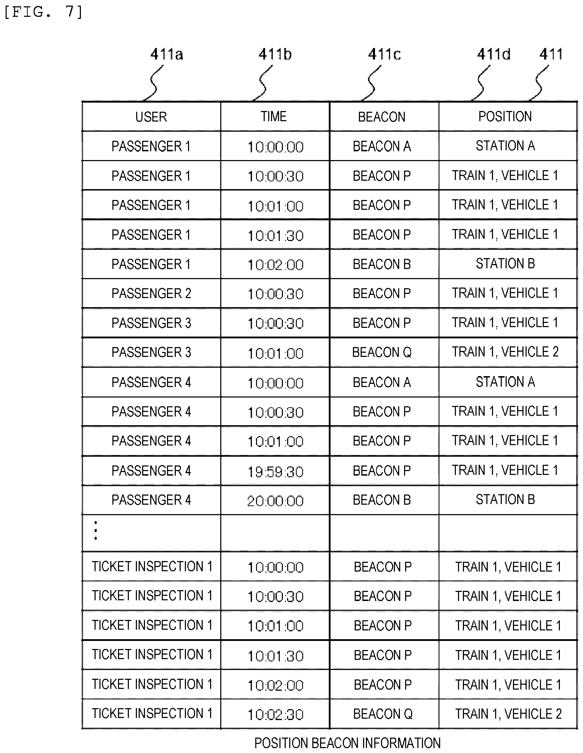

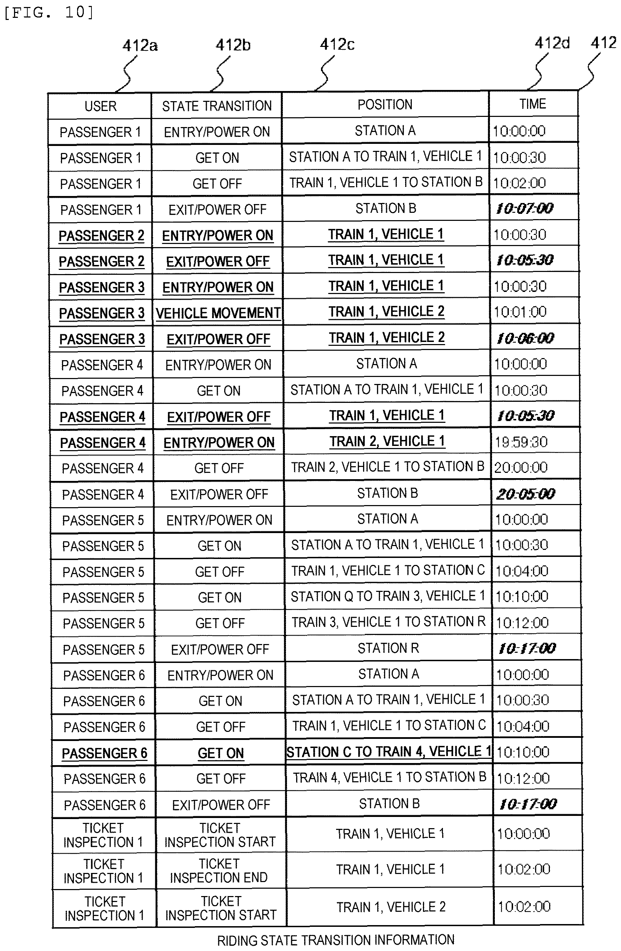

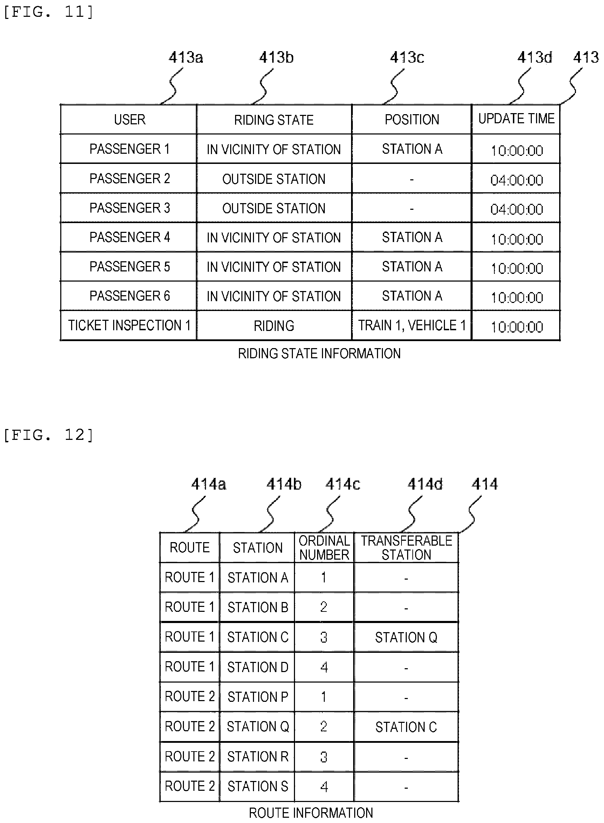

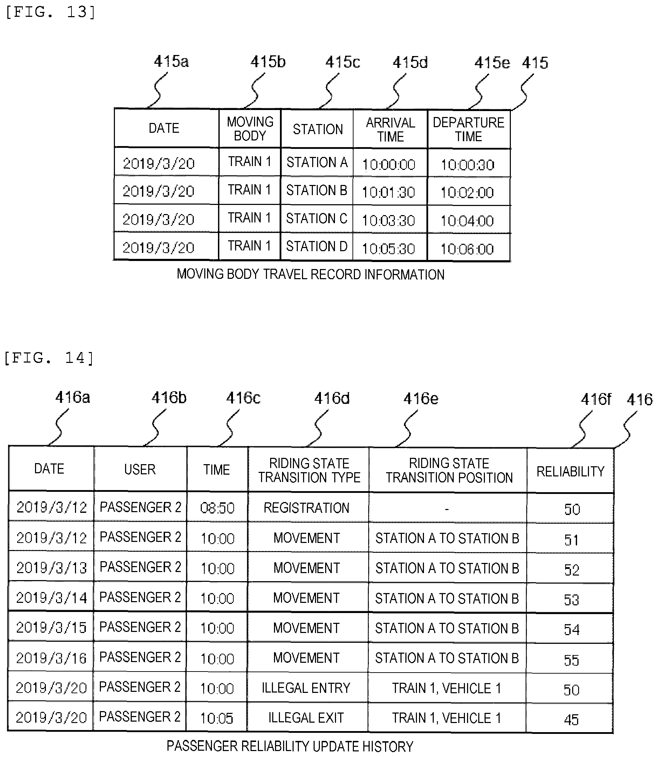

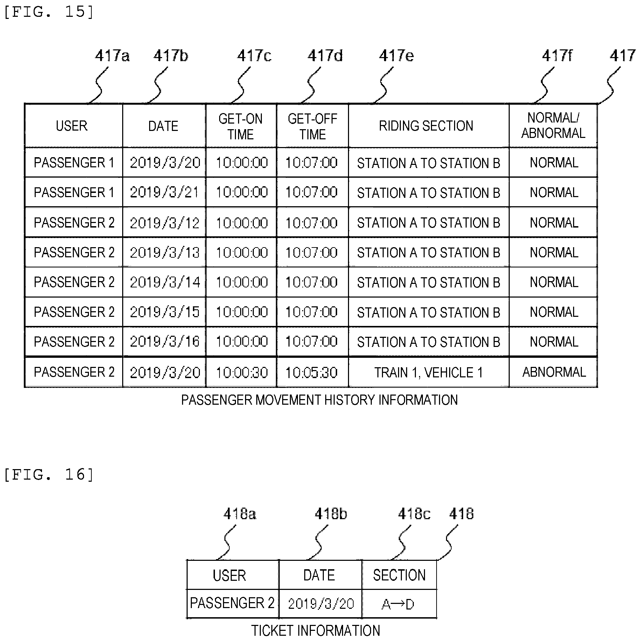

The position beacon information 411 is information of the position beacons 100 and 101 received by the passenger terminal 200, and a configuration example thereof will be described later with reference to FIG. 7. The riding state transition information 412 records a state and position information of each passenger in time series. A configuration example of the riding state transition information 412 will be described later with reference to FIG. 10. The riding state information 413 is current information of a state and a position of each passenger, and a configuration example thereof will be described later with reference to FIG. 11. The route information 414 is information of a railway route managed by the ticket system, and a configuration example thereof will be described later with reference to FIG. 12. The moving body travel record information 415 is information on a travel position and a time of a moving body such as a train, and a configuration example thereof will be described later with reference to FIG. 13. The passenger reliability update history 416 is information that records the reliability of each passenger in time series, and a configuration example thereof will be described later with reference to FIG. 14. The passenger movement history information 417 is information for recording a daily movement history of the passenger, and a configuration example thereof will be described later with reference to FIG. 15. The ticket information 418 is information for recording information on a ticket acquired by the ticket system, and a configuration example thereof will be described later with reference to FIG. 16. The user information 419 is information of a user (passenger, ticket inspection staff) of the ticket system, and a configuration example thereof will be described later with reference to FIG. 6. The beacon management information 420 is information related to the position beacons 100 and 101, and a configuration example thereof will be described with reference to FIG. 5.

FIG. 5 is a diagram showing a configuration example of the beacon management information 420.

The beacon management information 420 is a table in which the information related to the position beacons 100 and 101 is recorded. Various types of information described below will be described in a table format, but may be recorded in a data structure other than a table, such as a list, a DB, or a queue.

The beacon management information 420 includes a beacon 420a and a position 420b. The beacon 420a is identification information for uniquely identifying the position beacons 100 and 101. The position 420b is an installation place of the position beacons 100 and 101. When the position beacon 100 is installed at a station, a place (an entry, a platform, and the like) in the station may be recorded. When the position beacon 101 is installed in a train, a vehicle in which the position beacon 101 is installed is recorded so as to be specifiable.

FIG. 6 is a diagram showing a configuration example of the user information 419.

The user information 419 is a table in which information of the user (passenger, ticket inspection staff) of the ticket system is recorded, includes a user 419a, a type 419b, and reliability 419i, may include information 419c to 419h for specifying the person, and may include a penalty 419j.

The user 419a is identification information for uniquely identifying a user of the ticket system. The type 419b is a type of the user, and whether the user is a passenger or a ticket inspection staff is recorded. The reliability 419i is the calculated reliability of the user, and is used to control a priority of the ticket inspection. In the present embodiment, an initial value of the reliability 419i is set to 50, and a range thereof is set to 0 to 100.

The information for specifying the person is information received at the time of user registration or reservation, and includes an age 419c, a gender 419d, a country of residence 419e, a terminal ID 419f, a model 419g, and a color 419h. The information for specifying the person may include information other than those shown in the drawings as long as the information is useful for specifying the person to be inspected. The age 419c is an age of the user, and may be a range of the age (for example, 20's) instead of a real age. The gender 419d is a gender of the user. The country of residence 419e is a country of residence of the user, and is used to determine whether the user is familiar with the ticket system. The terminal ID 419f is identification information for uniquely identifying the passenger terminal 200 used by the user, and a telephone number, an IMSI, an IMEI, and the like may be used. The model 419g is a type of the passenger terminal 200 (for example, a model of a smartphone) used by the user. The color 419h is a color of the passenger terminal 200 (for example, a color of a smartphone) used by the user.

The penalty 419j is an amount of a penalty received from the user in the past, and it is possible to know the degree of illegal riding of the user.

It is sufficient that only the terminal ID 419f is recorded for the ticket inspection staff, and other information is not necessary.

FIG. 7 is a diagram showing a configuration example of the position beacon information 411.

The position beacon information 411 is a table for recording information of the position beacons 100 and 101 received by the passenger terminal 200, and the passenger terminal 200 transmits the received information of the position beacon 100 to the server 400 at predetermined time intervals (for example, 30 seconds) and records the information in the position beacon information 411. The passenger terminal 200 may transmit the position beacon information to the server 400 at a timing when a signal is newly received from the position beacons 100 and 101. The position beacon information 411 includes a user 411a, a time 411b, a beacon 411c, and a position 411d.

The user 411a is identification information for uniquely identifying a user of the ticket system. The time 411b is a time at which the passenger terminal 200 receives signals transmitted from the position beacons 100 and 101, and a time rounded to a predetermined time interval may be recorded, or a real time may be recorded. The beacon 411c is identification information of the position beacons 100 and 101 received by the passenger terminal 200. The position 411d is installation places of the position beacons 100 and 101 received by the passenger terminal 200.

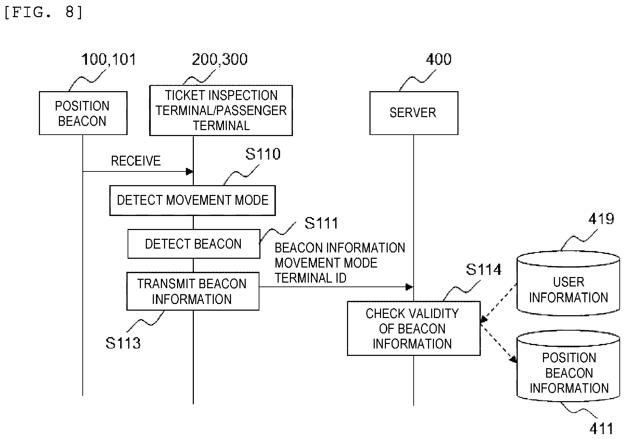

FIG. 8 is a flowchart of position beacon information creation processing.

The passenger terminal 200 and the ticket inspection terminal 300 receive signals from the position beacons 100 and 101. Further, the passenger terminal 200 and the ticket inspection terminal 300 detect a movement mode at a predetermined timing (for example, at a predetermined time interval) (S110). In the detection of the movement mode, the movement mode can be detected, for example, by comparing acceleration data acquired by the acceleration sensor with a predetermined acceleration pattern stored in advance for each movement mode. For example, since vibrations and acceleration patterns received by the passenger are different among a tram, a bus, and a private car, a plurality of moving units traveling on the same road can be specified by using the movement mode.

Next, the passenger terminal 200 and the ticket inspection terminal 300 detect beacons from the signals received from the position beacons 100 and 101 (S111).

Thereafter, the passenger terminal 200 and the ticket inspection terminal 300 transmit beacon information to the server 400 (S113). At this time, the detected movement mode and terminal ID may be transmitted.

When the server 400 receives the beacon information from the passenger terminal 200 and the ticket inspection terminal 300, the server 400 refers to the user information 419 and checks validity of the beacon information (S114). Specifically, it is determined whether there is a contradiction between the beacon information transmitted from the passenger terminal 200 and the ticket inspection terminal 300 and the movement mode. For example, when the passenger has received a signal from the position beacon 101 installed on a tram and it is determined that the movement mode is a private car, since there is a possibility that the position beacon 101 of an approaching tram is being received during moving of the private car, the received information of the position beacon 101 is discarded.

Then, the server 400 records the beacon information of which the validity is checked into the position beacon information 411.

For the passenger, even if the movement mode and the positions of the position beacons 100 and 101 are the same as those of the previous position beacon information, erroneous determination is prevented by additionally recording the movement mode and the positions of the position beacons 100 and 101 into the position beacon information 411.

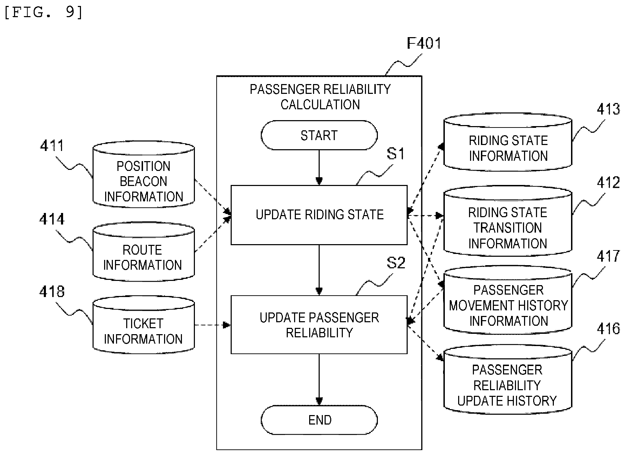

FIG. 9 is a flowchart of the passenger reliability calculation processing executed by the passenger reliability calculation function F401.

In the passenger reliability calculation processing, the riding state information 413, the riding state transition information 412, and the passenger movement history information 417 are updated based on the position beacon information 411 and the previous riding state.

The passenger reliability calculation processing is executed at a predetermined timing (for example, at a relatively long predetermined time interval such as a daily batch).

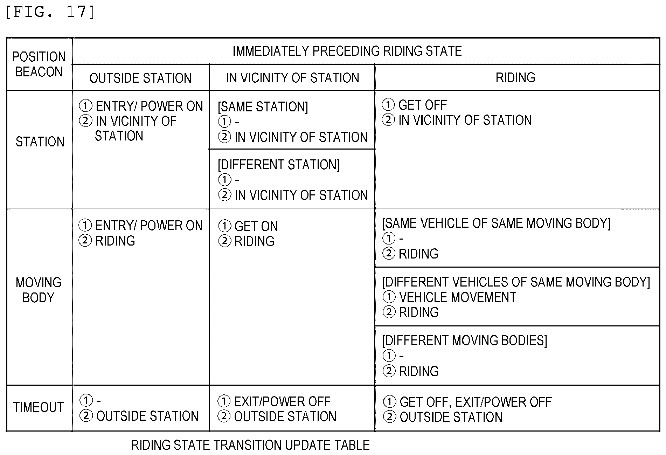

First, the server 400 refers to the riding state transition update table using the position 411d of the position beacon information 411 and a previous position 412c of the riding state transition information 412 as parameters, updates the riding state, and executes riding state update processing of recording the riding state into the riding state information 413, the riding state transition information 412, and the passenger movement history information 417 (S1). As shown in FIGS. 17 and 18, the riding state transition update table is a table in which a predetermined transition model is recorded. In the riding state update processing, the riding state of the passenger is updated using the transition model recorded in the riding state transition update table, but the riding state of the passenger may be updated by executing a program including a determination logic representing the transition model.

Next, the server 400 refers to the ticket information 418, and executes the passenger reliability update processing of updating riding passenger reliability and recording the updated riding passenger reliability in the passenger reliability update history 416 (S2). Details of the passenger reliability update processing will be described later with reference to FIG. 19.

FIG. 10 is a diagram showing a configuration example of the riding state transition information 412.

The riding state transition information 412 is a table in which state and position information for each passenger is recorded in time series, and includes a user 412a, a state transition 412b, the position 412c, and a time 412d.

The user 412a is identification information for uniquely identifying a user of the ticket system. The state transition 412b is a state of the user and is generated with reference to the position beacon information 411 and the transition model (see FIG. 17). The position 412c is a position of the user, and is generated with reference to the beacon management information 420 and the position beacon information 411. The time 412d is a time at which the state transition is detected.

In FIG. 10, data of the user 412a, the state transition 412b, and the position 412c shown with underline mark is a state in which there is a possibility of illegality, and may be managed by being distinguished from other data (for example, by setting a flag) in the riding state transition information 412. Further, data of the time shown in an oblique character indicates that the state and the position are unknown due to timeout caused by interruption of the communication with the passenger terminal 200 of the user for a predetermined time (for example, 5 minutes), and may be managed by being distinguished from other data (for example, by setting a flag) in the riding state transition information 412.

According to the riding state transition information 412 shown in the drawing, it is estimated that a passenger 1 is moving on a train 1 from station A to station B and is riding normally. Since a passenger 2 does not activate the passenger terminal 200 at the time of riding and activates the passenger terminal 200 while riding the train 1, there is a possibility that the passenger 2 saw the ticket inspection staff and activated the passenger terminal 200. Since a passenger 3 does not activate the passenger terminal 200 at the time of riding, activates the passenger terminal 200 while riding the train 1, and moves with the vehicle, there is a possibility that the passenger 3 saw the ticket inspection staff, activated the passenger terminal 200, and moved to another vehicle. Since a passenger 4 rides the train 1 from the station A and arrives at the station B by a train 2, is in a timeout state while riding the train 1 and the state and the position are not known, there is a possibility that the passenger 4 tries to make the movement from the station A to the station B via another station look like the movement from the station A to the station B. Since a passenger 5 moves from the station A to a station C by the train 1, transfers to a train 3 at the station C (station Q), and moves to a station R, it is estimated that the passenger 5 is riding normally including the transfer. A passenger 6 moves from the station A to the station C by the train 1, and moves from the station C to the station B by a train 4. Since the station B is located between the station A and the station C, it is estimated as riding-back (overriding, out-of-section riding, and the like).

FIG. 11 is a diagram showing a configuration example of the riding state information 413.

The riding state information 413 is a table in which current information of the state and the position of each passenger is recorded, and includes a user 413a, a riding state 413b, a position 413c, and an update time 413d.

The user 413a is identification information for uniquely identifying a user of the ticket system. The riding state 413b is a state of the user, and is generated with reference to the beacon management information 420 and the transition model (see FIG. 17). The position 413c is a position of the user, and is generated with reference to the beacon management information 420 and the position beacon information 411. The update time 413d is a time at which the state transition is detected. As the update time 413d, a predetermined initial value (4 o'clock in the drawing) is input every day, and the update time 413d is updated at a time when information of the state and the position is acquired from the passenger terminal 200.

FIG. 12 is a diagram showing a configuration example of the route information 414.

The route information 414 is a table in which information of a railway route managed by the ticket system is recorded, and includes a route 414a, a station 414b, an ordinal number 414c, and a transferable station 414d.

The route 414a is a table in which information of the railway route managed by the ticket system is recorded. The station 414b is a station name of the railway route. The ordinal number 414c is an arrangement order of stations in the railway route. The transferable station 414d is a name of a station that can be transferred to and from the station. In the shown route information 414, since the station C of a route 1 and the station Q of a route 2 are adjacent to each other, the route 1 and the route 2 can be transferred.

FIG. 13 is a diagram showing a configuration example of the moving body travel record information 415.

The moving body travel record information 415 is a table in which a travel position and a time of a moving body such as a train are recorded, and includes a date 415a, a moving body 415b, a station 415c, an arrival time 415d, and a departure time 415e.

The date 415a is a date on which the train traveled. The moving body 415b is identification information for uniquely identifying a train. The station 415c is a station (a start station, a stop station, or a terminal station) to which the train departs and arrives. The arrival time 415d and the departure time 415e are an arrival time and a departure time of a train at the station, respectively.

FIG. 14 is a diagram showing a configuration example of the passenger reliability update history 416.

The passenger reliability update history 416 is a table in which the reliability of each passenger is recorded in time series, and a record is added every time the passenger reliability is changed. The passenger reliability update history 416 includes a date 416a, a user 416b, a time 416c, a riding state transition type 416d, a riding state transition position 416e, and reliability 416f.

The date 416a is a date on which the movement that triggers the update of the reliability of the passenger is performed. The user 416b is identification information for uniquely identifying a user of the ticket system. The time 416c is a time at which the movement that triggers the update of the reliability of the passenger is performed. The riding state transition type 416d is an event that triggers the update of the reliability of the passenger, and records registration, movement, illegal entry, illegal exit, and the like. The riding state transition position 416e is position information related to the movement that triggers the update of the reliability of the passenger. The reliability 416f is reliability of the passenger.

In the shown passenger reliability update history 416, the passenger 2 is registered in the ticket system on March 12, 2019, and the passenger reliability is set to a predetermined initial value (for example, 50). Thereafter, the passenger 2 moves from the station A to the station B by normal riding, and thus the passenger reliability increases. Further, the inconsistency between entry data and exit data is detected for the passenger 2 on March 20, and the passenger reliability is decreased.

Although illustration is omitted, in addition to the passenger reliability update history 416, passenger reliability information in which current reliability of the passenger is recorded may be stored in the server 400.

FIG. 15 is a diagram showing a configuration example of the passenger movement history information 417.

The passenger movement history information 417 is a table in which a daily movement history of the passenger is recorded, and is generated from the riding state transition information 412. The passenger movement history information 417 is a table in which the daily movement history of the passenger is recorded, and includes a user 417a, a date 417b, a get-on time 417c, a get-off time 417d, a riding section 417e, and normal 417f.

The user 417a is identification information for uniquely identifying a user of the ticket system. The date 417b is a date on which the user moves on the train. The get-on time 417c is a time at which the user gets on the train. The get-off time 417d is a time at which the user gets off the train. The riding section 417e is a section in which the user moved on the train. The normal 417f is a determination result as to whether the movement of the user is normal.

According to the riding state transition information 412 shown in FIG. 10, since the passenger 2 does not activate the passenger terminal 200 at the time of riding on March 20 and activates the passenger terminal 200 while riding the train 1, there is a possibility that the passenger 2 saw the ticket inspection staff and activated the passenger terminal 200. Therefore, in the passenger movement history information 417, it is recorded that the movement of the passenger 2 on March 20 is abnormal.

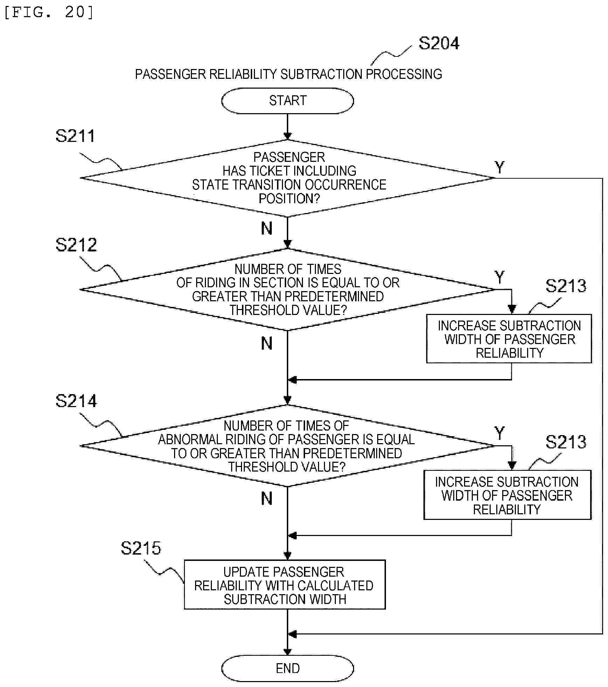

Further, the passenger 2 frequently moves normally between the station A and the station B, and it is difficult to consider that the abnormal movement on March 20 is due to unfamiliarity with the ticket system. On the other hand, if a passenger who uses the ticket system less frequently (for example, the passenger has no history of use in the past) moves abnormally, it is estimated that the passenger is not familiar with the ticket system. Therefore, in processing described later (step S212 of the passenger reliability subtraction processing shown in FIG. 20), even if an abnormal movement is detected, an amount of change in the reliability may vary depending on the frequency of use of the passenger. Further, in processing described later (step S214 of the passenger reliability subtraction processing shown in FIG. 20), an amount of change in the reliability may vary depending on the number of times or the frequency of recording of the abnormal movement.

FIG. 16 is a diagram showing a configuration example of the ticket information 418.

The ticket information 418 is a table in which information of a ticket acquired by the passenger in the ticket system is recorded, and includes a user 418a, a date 418b, and a section 418c.

The user 418a is identification information for uniquely identifying a user of the ticket system. The date 418b is a date or a period in which the ticket can be used. The section 418c is a section in which the user can ride by the ticket.

In processing described later (step S211 of the passenger reliability subtraction processing shown in FIG. 20), it is determined whether the passenger has a ticket with reference to the ticket information 418. For example, when the passenger 2 has a ticket for riding from the station A to a station D on March 20, the abnormal riding of the passenger 2 on March 20 recorded in the passenger movement history information 417 (FIG. 15) is estimated as a case in which the passenger 2 notices that the passenger terminal 200 is not activated after riding, activates the passenger terminal 200, confirms the purchased ticket, and terminates the passenger terminal 200. Therefore, the reliability may not be changed. On the other hand, when the passenger 2 does not have a ticket usable on March 20, the abnormal riding of the passenger 2 on March 20 recorded in the passenger movement history information 417 (FIG. 15) is riding without a ticket, and it is estimated as a case in which the passenger 2 activated the passenger terminal 200 when coming to the ticket inspection. Therefore, the reliability is updated so as to be lowered.

FIGS. 17 and 18 are diagrams showing a configuration example of the riding state transition update table. FIG. 17 shows an example of the riding state transition update table when the position beacon 100 is installed at the station. FIG. 18 shows an example of the riding state transition update table when the position beacon 100 is not installed at the station.

In the riding state transition update table, a logic for deriving a current riding state of the passenger is recorded using a combination of the received position beacon 101, a traveling state, and an immediately preceding moving state of the passenger.

In particular, the riding state transition update table shown in FIG. 18 is applied when the position beacon 100 is not installed at the station, and the riding state of the passenger is estimated using a parameter of the traveling state (stopping or traveling) of the moving body (train) . The traveling state can be acquired from, for example, a vehicle position of GTFS Real time. In current_status, which is an element of the vehicle position, a state of stopping and traveling to the next station is recorded. By acquiring and accumulating the information, it is possible to specify a traveling state of a moving body using a moving body name and a time. Further, the moving body travel record information 415 (see FIG. 13) included in a system that manages an operation plan of the moving body may be acquired, and the information may be used. That is, when the time of the position beacon information is between an arrival time and a departure time of a certain moving body, the traveling state is estimated to be stopping, and when the time of the position beacon information is between a departure time of a certain station and an arrival time of the next station, the traveling state is estimated to be traveling.

Hereinafter, each riding state transition update table will be described. In the riding state transition update table shown in FIG. 17, in a case where a signal is received from the position beacon 100 of the station, if the immediately preceding riding state is outside the station, it is estimated that the passenger enters the station and waits for the train, and the riding state is derived as "entry/power ON" and the position is derived as "in vicinity of station". Further, if the immediately preceding riding state is in the vicinity of the same station, it is estimated that the passenger is not moving, the riding state is "-" indicating that there is no change, and the position is derived as "in vicinity of station". Further, if the immediately preceding riding state is in the vicinity of a different station, it is estimated that the passenger is moving, but since the moving unit is unknown, the riding state is not changed, and the position is derived as "in vicinity of station". Further, if the immediately preceding riding state is riding, it is estimated that the passenger has got off from the train, and therefore, the riding state is derived as "get off" and the position is derived as "in vicinity of station".

Further, in a case where a signal is received from the position beacon 101 of the moving body (vehicle), if the immediately preceding riding state is outside the station, it is estimated that the passenger has entered the station and got on the train, and the riding state is derived as "entry/power ON" and the position is derived as "riding". Further, if the immediately preceding riding state is in the vicinity of the station, it is estimated that the passenger has got on the train, and the riding state is derived as "get on" and the position is derived as "riding". Further, when the immediately preceding riding state is riding in the same vehicle of the same moving body, it is estimated that the passenger is riding in the same vehicle as it is, and the riding state is not changed and the position is derived as "riding". Further, when the immediately preceding riding state is riding in a different vehicle of the same moving body, it is estimated that the passenger is moving in the same train but is riding in a different vehicle, and the riding state is derived as "vehicle movement" and the position is derived as "riding". Further, in a case where the immediately preceding riding state is riding in a different moving body, since the moving unit is unknown, the riding state is not changed, and the position is derived as "riding".

Further, in a case where a timeout occurs without receiving any signal from the position beacons 100 and 101, if the immediately preceding riding state is outside the station, it is estimated that the passenger is outside the station, the riding state is not changed, and the position is derived as "outside station". Further, if the immediately preceding riding state is in the vicinity of the station, it is estimated that the passenger has moved to the outside of the station, and the riding state is derived as "exit/power OFF" and the position is derived as "outside station" . Further, if the immediately preceding riding state is riding, it is estimated that the passenger has got off the train and moved to the outside of the station, and the riding state is derived as "get off, exit/power OFF" and the position is derived as "outside station".

Further, in the riding state transition update table shown in FIG. 18, in a case where a signal is received from the position beacon 101 of a stopping moving body (vehicle), if the immediately preceding riding state is outside the station, it is estimated that the passenger has entered the station and got on the train, and the riding state is derived as "entry/power ON" and the position is derived as "in vicinity of station". Further, if the immediately preceding riding state is in the vicinity of the same station, it is estimated that the passenger is not moving, the riding state is "-" indicating that there is no change, and the position is derived as "in vicinity of station". Further, if the immediately preceding riding state is in the vicinity of a different station, it is estimated that the passenger is moving, but since the moving unit is unknown, the riding state is derived as "-", and the position is derived as "in vicinity of station". Further, if the immediately preceding riding state is riding, it is unknown whether the passenger is riding on the train or has got off the train, and therefore, the riding state is not changed and the position is derived as "in vicinity of station" .

Further, in a case where a signal is received from the position beacon 101 of the moving body (vehicle) that is traveling, if the immediately preceding riding state is outside the station, it is estimated that the passenger has entered the station and got on the train, and the riding state is derived as "entry/power ON" and the position is derived as "riding". Further, in a case where the immediately preceding riding state is in the vicinity of the station and the immediately preceding riding state transition event is entry/power ON, it is estimated that the passenger has got on the train, and the riding state is "get on" and the position is "riding" . Further, when the immediately preceding riding state is in the vicinity of the station and the immediately preceding riding state transition event is not entry/power ON, it is estimated that the passenger is got on the train, and the riding state is not changed and the position is derived as "riding" . Further, when the immediately preceding riding state is riding in the same vehicle of the same moving body, it is estimated that the passenger is riding in the same vehicle as it is, and the riding state is not changed and the position is derived as "riding". Further, when the immediately preceding riding state is riding in a different vehicle of the same moving body, it is estimated that the passenger is moving in the same train but is riding in a different vehicle, and the riding state is derived as "vehicle movement" and the position is derived as "riding". Further, in a case where the immediately preceding riding state is riding in a different moving body, since the moving unit is unknown, the riding state is not changed, and the position is derived as "riding".

In addition, in a case where a timeout occurs without receiving any signal from any of the position beacons 100 and 101, if the immediately preceding riding state is outside the station, it is estimated that the passenger is outside the station, the riding state is not changed, and the position is derived as "outside station". Further, in a case where the immediately preceding riding state is in the vicinity of the station and the immediately preceding riding state transition event is riding or vehicle movement, it is estimated that the passenger has got off the train and moved to the outside of the station, and the riding state is derived as "get off, exit/power OFF" and the position is derived as "outside station". Further, in a case where the immediately preceding riding state is in the vicinity of the station and the immediately preceding riding state transition event is not get on or vehicle movement, it is estimated that the passenger has moved to the outside of the station, and the riding state is derived as "exit/power OFF" and the position is derived as "outside station". Further, if the immediately preceding riding state is riding, it is estimated that the passenger has got off the train and moved to the outside of the station, and the riding state is derived as "get off, exit/power OFF" and the position is derived as "outside station".

FIG. 19 is a flowchart of the passenger reliability update processing (S2).

First, the passenger reliability calculation function F401 reads the riding state transition information 412 (S201) .

Thereafter, the processing of step S202 and the subsequent steps is executed for each user.

First, a state transition type is determined (S202). Then, in a case where the state transition type is entry/power ON, it is determined whether a state transition occurrence position is a station (S203). Then, if the state transition occurrence position is not a station, the passenger terminal 200 is activated at a place other than the station, and therefore, it is estimated that there is a risk of illegality, and the passenger reliability is subtracted (S204). Details of the passenger reliability subtraction processing will be described later with reference to FIG. 20. Thereafter, it is determined whether the position of the passenger is a vehicle under ticket inspection (S205) . As a result, if the position of the passenger is a vehicle under the ticket inspection, it is estimated that the passenger is away from the ticket inspection staff and there is a risk of illegality, and the passenger reliability is further subtracted (S204).

When the state transition type is exit/power OFF, it is determined whether the state transition occurrence position is a station (S203). Then, if the state transition occurrence position is not a station, the passenger terminal 200 is activated at a place other than the station, and therefore, it is estimated that there is a risk of illegality, and the passenger reliability is subtracted (S204) . On the other hand, if the state transition occurrence position is a station, it is estimated that the passenger is riding normally, and the passenger reliability is added (S206). The addition of the passenger reliability may be executed when a combination of normal get-on and normal get-off is established.

In a case where the state transition type is the vehicle movement, it is determined whether the position after the state transition occurs is a vehicle under the ticket inspection (S207). As a result, if the position after the state transition occurs is a vehicle under the ticket inspection, it is estimated that the passenger is away from the ticket inspection staff and there is a risk of illegality, and the passenger reliability is subtracted (S204).

FIG. 20 is a flowchart of the passenger reliability subtraction processing (S204).

First, it is determined whether the passenger has a ticket including the position where the state transition occurs (S211). As a result, with reference to the ticket information 418, if the passenger has a ticket including the position where the state transition occurs, it is estimated that the passenger is regular riding and forget to activate the passenger terminal 200, and the passenger reliability subtraction processing is ended. On the other hand, if the passenger does not have a ticket including the position where the state transition occurs, it is determined whether the number of times of riding of the passenger in the section is equal to or greater than a predetermined threshold value with reference to the passenger movement history information 417 (S212). If the number of times of riding of the passenger in the section is equal to or greater than the predetermined threshold value, a subtraction width of the passenger reliability is increased (S213). On the other hand, if the number of times of riding of the passenger in the section is smaller than the predetermined threshold value, a subtraction width of determination reliability is not increased, and the determination reliability remains at a predetermined value (for example, 1 which is an initial value) . This is to relieve the passenger who is not familiar with the use of the system because the number of times of riding in the section is small. Similarly, in step S212, by referring to the country of residence 419e of the user information 419, the subtraction width of the determination reliability of a person who is not living in the country may not be increased, and the initial value may be maintained, or the subtraction width may be set to 0.

Thereafter, it is determined whether the number of times of abnormal riding of the passenger is equal to or greater than a predetermined threshold value by referring to the passenger movement history information 417 (S214) . As a result, if the number of times of abnormal riding of the passenger is equal to or greater than the predetermined threshold value, it is estimated that the passenger is a bad passenger who is actually taking abnormal riding, and the subtraction width of the passenger reliability is increased (S213). In step S214, it may be determined whether the passenger is a bad passenger based on the number of times of abnormal riding, or it may be determined whether the passenger is a bad passenger based on a ratio between abnormal riding and normal riding.

Thereafter, the passenger reliability is updated with the calculated subtraction width (S215).

Further, in addition to the illustrated parameters (the number of times of riding and the number of times of abnormal riding in the section), the subtraction width of the passenger reliability may be determined to be small so as to relieve the passenger who is not familiar with the use of the system by using a residence or nationality of the passenger.

FIG. 21 is a sequence diagram of the recommended ticket inspection position presentation processing.

The recommended ticket inspection position presentation processing is activated in response to a request from the ticket inspection terminal 300, but the recommended ticket inspection position presentation processing may be executed as batch processing that is repeated at a predetermined timing.

First, the ticket inspection terminal 300 transmits a recommended ticket inspection position acquisition request including a ticket inspection terminal ID to the server 400 with an operation on a "recommended ticket inspection position" button as a trigger (S301).

The server 400 refers to the position beacon information 411 and the user information 419, and determines a vehicle on which the ticket inspection staff is riding from the position beacon information of the ticket inspection terminal 300 (S302) . Further, the server 400 refers to the position beacon information 411, the passenger reliability update history 416, and the user information 419, totals the reliability of the passengers in riding (S303), and transmits a frequency distribution by reliability according to the vehicle to the ticket inspection terminal 300.

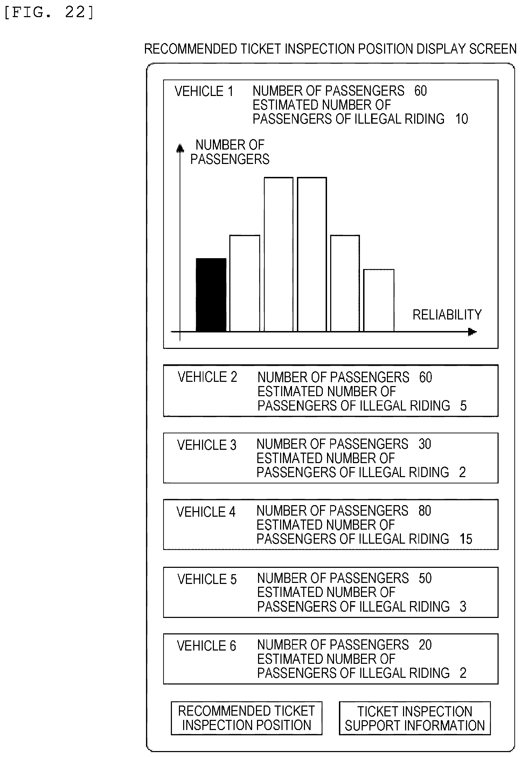

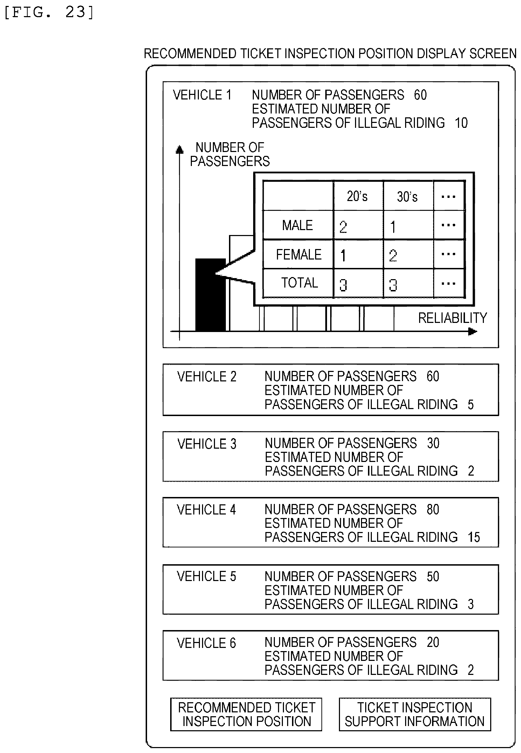

When the ticket inspection terminal 300 receives the frequency distribution by reliability according to the vehicle, the ticket inspection terminal 300 displays a recommended ticket inspection position (for example, a recommended ticket inspection position display screen shown in FIGS. 22 and 23) by the recommended ticket inspection position presentation function F301. The ticket inspection staff can determine a vehicle to be preferentially inspected by viewing the recommended ticket inspection position display screen, so as to improve the efficiency of the ticket inspection.

FIGS. 22 and 23 are diagrams showing an example of the recommended ticket inspection position display screen.

As shown in FIG. 22, the recommended ticket inspection position display screen displays information on passengers for each vehicle. Specifically, the number of passengers and the number of passengers suspected of illegal riding in each vehicle are displayed. When an area of each vehicle is selected (for example, tapped), the frequency distribution of the number of passengers for each reliability in the vehicle can be displayed in a graph form.

Further, when a bar of the frequency distribution of the reliability displayed in the graph is selected, an attribute of the passenger counted as the reliability is displayed. For example, as shown in FIG. 23, the number of passengers having the reliability may be displayed in a matrix of gender and age. Further, attributes (gender, age, and the like) of the passenger having the reliability may be displayed in a list form.

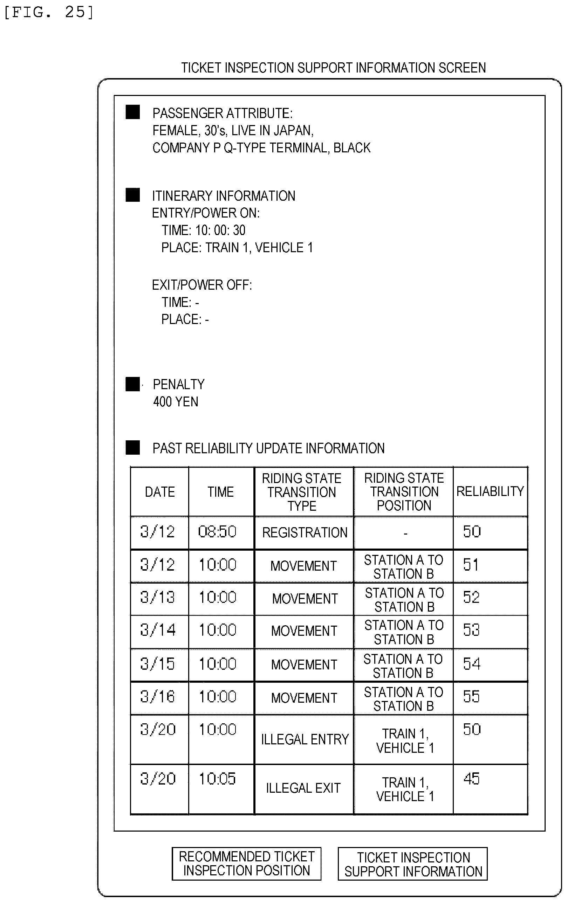

The recommended ticket inspection position display screen is provided with the "recommended ticket inspection position" button and a "ticket inspection support information" button. The "ticket inspection support information" button is a button to be operated for transition to the ticket inspection support information screen (see FIG. 25) . When the "recommended ticket inspection position" button is operated on the recommended ticket inspection position display screen, the recommended ticket inspection position acquisition request can be transmitted to the server 400 and the latest data is updated.

FIG. 24 is a flowchart of the ticket inspection support information presentation processing.

The ticket inspection support information presentation processing is processing that is activated in response to a request from the ticket inspection terminal 300, and collects and displays information of a passenger who is highly likely to be in illegal riding among the passengers who are present in a specific vehicle (for example, the same vehicle as the ticket inspection staff).

First, the ticket inspection terminal 300 transmits a ticket inspection support information request including a ticket inspection terminal ID to the server 400 with the operation on the "ticket inspection support information" button as a trigger (S401).

The server 400 refers to the position beacon information 411 and the passenger reliability update history 416 by the recommended ticket inspection position calculation F402, collects information of a passenger having a low passenger reliability among the passengers riding in the vehicle, creates ticket inspection support information, and transmits itinerary information (riding state transition information 412), the passenger reliability update history 416, and the penalty 419j regarding the passenger to the ticket inspection terminal 300.

When the ticket inspection terminal 300 receives the ticket inspection support information, the ticket inspection terminal 300 displays the ticket inspection support information screen (see FIG. 25) by the ticket inspection support information presentation function F302. The ticket inspection staff can acquire information of a passenger who is highly likely to be in illegal riding, so as to improve the efficiency of the ticket inspection.

The ticket inspection staff looks at the ticket inspection support information screen and performs an operation of transmitting a ticket inspection request beacon (S501).

When the passenger terminal 200 receives the ticket inspection request beacon, a ticket inspection request response is displayed by the ticket inspection response processing function F201. For example, the ticket inspection request response displays a screen for prompting the passenger to respond to the ticket inspection (for example, a message of "please present a ticket to the train crew"), or displays a screen designated at the time of the ticket inspection request (for example, displays a specific color), and therefore, it is easy for the ticket inspection staff to identify the subj ect.

FIG. 25 is a diagram showing an example of the ticket inspection support information screen.

The inspection support information screen includes display areas of a passenger attribute, the itinerary information, the penalty, and past reliability update information.

The display area of the passenger attribute displays an attribute of a passenger to be inspected. The passenger attribute is useful for identifying the passenger to be inspected by the ticket inspection staff. The display area of the itinerary information displays the transition of the riding state that has occurred in the passenger. For example, a time and a place of the entry/power ON event, a train or a vehicle where a passenger is riding, and a time and a place of the exit/power OFF event are displayed. The display area of the penalty displays a penalty received from the passenger in the past, which is acquired from the user information 419. The display area of the past reliability update information displays a temporal change of the reliability of the passenger acquired from the passenger reliability update history 416 together with the riding state transition type and the riding state transition position.

The inspection support information screen is provided with the "recommended ticket inspection position" button and the "ticket inspection support information. The "recommended ticket inspection position" button is a button to be operated for transition to the recommended ticket inspection position display screen (FIGS. 22 and 23) . When the "ticket inspection support information" button is operated on the ticket inspection support information screen, a ticket inspection support information request is transmitted to the server 400.

As described above, the ticket system according to the embodiment of the invention includes the position beacon 101 installed in the moving body (for example, the train) on which the passenger rides, the passenger terminal 200 used by the passenger, the ticket inspection terminal 300 used by the ticket inspection staff, and the server 400 connected to the passenger terminal 200 and the ticket inspection terminal 300. The passenger terminal 200 detects the position beacon 101, the server 400 manages an identifier of the position beacon 101 detected by the passenger terminal 200 in association with an identifier of the passenger terminal 200, manages a temporal change in a state and a place of the passenger terminal as the riding state transition information 412 based on a correspondence relationship between the identifier of the position beacon 101 and the identifier of the passenger terminal 200, and updates the reliability of the passenger based on the riding state transition information 412 by the passenger reliability calculation function F401. Therefore, it is possible to provide information of a place where the passenger is to be inspected based on the reliability of each passenger, and to improve the efficiency of the ticket inspection work in the vehicle.

Further, since the server 400 updates the reliability of the passenger based on a position of the moving body during the riding state transition (for example, steps S203, S204, and S206 in FIG. 19), it is possible to detect the passenger terminal 200 that is activated at a place other than the station and the passenger terminal 200 that is stopped, and to detect riding that does not conform to a rule.

Further, since the server 400 updates the reliability of the passenger based on a traveling state of the moving body during the riding state transition, it is possible to detect the passenger terminal 200 that is activated during the train traveling and the passenger terminal 200 that is stopped, and to detect the riding that does not conform to the rule.

Further, the server 400 manages the place of the ticket inspection terminal 300 based on the correspondence relationship between the identifier of the position beacon installed in the moving body and the identifier of the ticket inspection terminal 300, and updates the reliability of the passenger who uses the passenger terminal 200 near the ticket inspection terminal 300 based on the position of the ticket inspection terminal 300 during the riding state transition, and therefore, it is possible to reduce the reliability of a passenger who is estimated to be away from the ticket inspection staff and have a risk of illegality.

Further, when it is determined that the passenger frequently rides in the section based on the riding history of the passenger, the server 400 updates the reliability of the passenger with a large subtraction range (for example, steps S212 and S213 in FIG. 20), and therefore, it is possible to relieve a passenger who is not familiar with the use of the system because the number of times of riding in the section is small.

Further, when it is determined that the passenger is a bad passenger based on the abnormal riding history of the passenger, the server 400 updates the reliability of the passenger with a large subtraction range (for example, steps S214 and S213 in FIG. 20), and therefore, a penalty can be imposed on a bad passenger who is always taking an abnormal ride.

Further, the server 400 transmits the recommended ticket inspection position information including the reliability of the passenger who uses the passenger terminal 200 satisfying a predetermined position condition to the ticket inspection terminal 300, and the ticket inspection terminal 300 displays the received recommended ticket inspection position information by the recommended ticket inspection position presentation F301, and therefore, the ticket inspection staff can determine a vehicle to preferentially perform the ticket inspection by looking at the recommended ticket inspection position information, and can improve the efficiency of the ticket inspection.

Further, the server 400 determines whether to manage the identifier of the position beacon 101 detected by the passenger terminal 200 and the identifier of the passenger terminal 200 in association with each other based on the movement mode of the passenger terminal 200 during the riding state transition (for example, step S114 of FIG. 8), and therefore, it is possible to prevent an erroneous update of the reliability.

Further, the server 400 refers to a history of the reliability of the passenger, collects information of a passenger having a low reliability among the passengers riding on the moving body, and transmits the collected information to the ticket inspection terminal 300, and therefore, the ticket inspection staff can acquire information of a passenger who is highly likely to be in illegal riding, and can improve the efficiency of the ticket inspection.

Further, the ticket inspection terminal 300 transmits an inspection request to the passenger terminal 200 based on the information of the passenger transmitted from the server 400 (for example, step S501 of FIG. 24), and when the ticket inspection request is received, the passenger terminal 200 prompts the passenger to respond to the ticket inspection by the ticket inspection response display function F201, and displays the screen designated during the ticket inspection request, and therefore, it is possible to prompt the passenger to respond to the ticket inspection. Further, for example, when the entire background of the screen is red as the screen designated during the ticket inspection request, it is possible to improve the efficiency of the ticket inspection because the ticket inspection staff knows that the application is activated at a glance.

Further, the position beacons 100 and 101 are installed inside a moving body and in a station of the moving body, and the server 400 manages the state and the place of the passenger terminal 200 using the identifier of the position beacon 101 installed in the moving body and an identifier of the position beacon 100 installed in the station, and therefore, it is possible to accurately manage the transition of the riding state of the passenger terminal 200.

The invention is not limited to the above embodiments and includes various modifications and equivalent configurations within the scope of the claims. For example, the above embodiments have been described in detail in order to make the invention easy to understand, and the invention is not necessarily limited to those which have all the configurations described. Further, a part of configurations of one embodiment can be replaced with another configuration. Further, the configuration of one embodiment can also be added to the configuration of another embodiment. Further, a part of the configuration of each embodiment may be added to, deleted from, or replaced with another configuration.

## Claims

1. A ticket system used when a passenger rides a vehicle, the ticket system comprising:
a position beacon (101) installed in a moving body on which a passenger rides;
a passenger terminal (200) used by a passenger;
a ticket inspection terminal (300) used by a ticket inspection staff; and
a server (400) connected to the passenger terminal (200) and the ticket inspection terminal, wherein
the passenger terminal (200) is configured to detect the position beacon,
the server (400) is configured to
manage a passenger reliability (419i) and a passenger reliability update history (416) of a passenger;
manage an identifier of the position beacon (101) detected by the passenger terminal (200) in association with an identifier of the passenger terminal;
manage a place of the ticket inspection terminal (300) based on a correspondence relationship between the identifier of the position beacon (101) installed in the moving body and the identifier of the ticket inspection terminal;
manage a temporal change in a state and a place of the passenger terminal (200) as a riding state transition based on a correspondence relationship between the identifier of the position beacon (101) and the identifier of the passenger terminal; and
update said reliability (419i) of a passenger whc uses a passenger terminal (200) near the ticket inspection terminal (300) based on a position of the ticket inspection terminal (300) during the riding state transition,
wherein
the server (400) is configured to refer to said passenger reliability update history (416) of the passenger, collect information of a passenger having a low reliability (419i) among passengers riding on the moving body, and transmit the collected information to the ticket inspection terminal.

2. The ticket system according to claim 1, wherein
the server (400) is configured to update the reliability (419i) of the passenger based on a position of the moving body during the riding state transition.

3. The ticket system according to claim 1, wherein
the server (400) is configured to update the reliability (419i) of the passenger based on a traveling state of the moving body during the riding state transition.

4. The ticket system according to claim 1, wherein
the server (400) is configured to update the reliability (419i) of the passenger with a large subtraction range when it is determined that the passenger frequently rides in a section based on a riding history of the passenger.

5. The ticket system according to claim 1, wherein
the server (400) is configured to update the reliability (419i) of the passenger with a large subtraction range when it is determined that the passenger is a bad passenger based on an abnormal riding history of the passenger.

6. The ticket system according to claim 1, wherein
the server (400) is configured to transmit, to a ticket inspection terminal, recommended ticket inspection position information including a reliability (419i) of a passenger who uses a passenger terminal (200) satisfying a predetermined position condition, and
the ticket inspection terminal (300) is configured to display the received recommended ticket inspection position information.

7. The ticket system according to claim 1, wherein
the server (400) is configured to determine whether to manage the identifier of the position beacon (101) detected by the passenger terminal (200) and the identifier of the passenger terminal (200) in association with each other, based on a movement mode of the passenger terminal (200) during the riding state transition.

8. The ticket system according to claim 8, wherein
the ticket inspection terminal (300) is configured to transmit a ticket inspection request to the passenger terminal (200) based on the information of the passenger transmitted from the server, and
the passenger terminal (200) is configured to, when the ticket inspection request is received, prompt the passenger to respond to ticket inspection, and display a screen designated during the ticket inspection request.

9. The ticket system according to claim 1, wherein
the position beacon (101) is installed inside the moving body and in a station of the moving body, and
the server (400) is configured to manage a state and a place of the passenger terminal (200) by using an identifier of a position beacon (101) installed in the moving body and an identifier of a position beacon (101) installed in the station.

10. A ticket management method executed by a ticket system,
the ticket system including a position beacon (101) installed in a moving body on which a passenger rides, a passenger terminal (200) used by a passenger, a ticket inspection terminal (300) used by a ticket inspection staff, and a server (400) connected to the passenger terminal (200) and the ticket inspection terminal,
the ticket management method comprising:
detecting the position beacon (101) by the passenger terminal;
the ticket management method further comprises
managing, by the server (400), a passenger reliability (419i) and a passenger reliability update history (416) of a passenger;
managing, by the server (400), an identifier of the position beacon (101) detected by the passenger terminal (200) in association with an identifier of the passenger terminal;
managing, by the server (400), a place of the ticket inspection terminal (300) based on a correspondence relationship between the identifier of the position beacon (101) installed in the moving body and the identifier of the ticket inspection terminal;
managing, by the server (400), a temporal change in a state and a place of the passenger terminal (200) as a riding state transition based on a correspondence relationship between the identifier of the position beacon (101) and the identifier of the passenger terminal; and
updating, by the server (400), the reliability (419i) of a passenger who uses a passenger terminal (200) near the ticket inspection terminal (300) based on a position of the ticket inspection terminal (300) during the riding state transition,
wherein
the server (400) refers to said passenger reliability update history (416) of the passenger, collect information of a passenger having a low reliability (419i) among passengers riding on the moving body, and transmit the collected information to the ticket inspection terminal.

## Patentansprüche

1. Fahrkartensystem, das verwendet wird, wenn ein Fahrgast mit einem Fahrzeug fährt, wobei das Fahrkartensystem umfasst:
eine Positionsbake (101), die in einem sich bewegenden Körper installiert ist, auf dem ein Fahrgast mitfährt;
ein Fahrgastterminal (200), das von einem Fahrgast verwendet wird;
ein Fahrkartenkontrollterminal (300), das von einem Fahrkartenkontrollpersonal verwendet wird; und
einen Server (400), der mit dem Fahrgastterminal (200) und dem Fahrkartenkontrollterminal verbunden ist,
wobei das Fahrgastterminal (200) dazu konfiguriert ist, die Positionsbake zu erfassen,
der Server (400) dazu konfiguriert ist:
eine Fahrgastzuverlässigkeit (419i) und eine Fahrgastzuverlässigkeitsaktualisierungshistorie (416) eines Fahrgasts zu verwalten;
eine Kennung der Positionsbake (101), die von dem Fahrgastterminal (200) erfasst wird, in Verbindung mit einer Kennung des Fahrgastterminals zu verwalten;
einen Ort des Fahrkartenkontrollterminals (300) basierend auf einer Korrespondenzbeziehung zwischen der Kennung der Positionsbake (101), die in dem sich bewegenden Körper installiert ist, und der Kennung des Fahrkartenkontrollterminals zu verwalten;
eine zeitliche Änderung eines Zustands und eines Ortes des Fahrgastterminals (200) als einen Fahrzustandsübergang basierend auf einer Korrespondenzbeziehung zwischen der Kennung der Positionsbake (101) und der Kennung des Fahrgastterminals zu verwalten; und
die Zuverlässigkeit (419i) eines Fahrgastes, der ein Fahrgastterminal (200) nahe des Fahrkartenkontrollterminals (300) verwendet, basierend auf einer Position des Fahrkartenkontrollterminals (300) während des Fahrzustandsübergangs zu aktualisieren,
wobei der Server (400) dazu konfiguriert ist, auf die Fahrgastzuverlässigkeitsaktualisierungshistorie (419i) des Fahrgastes Bezug zu nehmen, Informationen über einen Fahrgast mit einer niedrigen Zuverlässigkeit (419i) unter den Fahrgästen, die mit dem sich bewegenden Körper fahren, zu sammeln und die gesammelten Informationen an das Fahrkartenkontrollterminal zu übermitteln.

2. Fahrkartensystem nach Anspruch 1,
wobei der Server (400) dazu konfiguriert ist, die Zuverlässigkeit (419i) des Fahrgastes basierend auf einer Position des sich bewegenden Körpers während des Fahrzustandsübergangs zu aktualisieren.

3. Fahrkartensystem nach Anspruch 1,
wobei der Server (400) dazu konfiguriert ist, die Zuverlässigkeit (419i) des Fahrgastes basierend auf einem Fahrtzustand des sich bewegenden Körpers während des Fahrzustandsübergangs zu aktualisieren.

4. Fahrkartensystem nach Anspruch 1,
wobei der Server (400) dazu konfiguriert ist, die Zuverlässigkeit (419i) des Fahrgastes mit einem großen Subtraktionsbereich zu aktualisieren, wenn basierend auf einer Fahrhistorie des Fahrgastes festgestellt wird, dass der Fahrgast häufig in einem Abschnitt fährt.

5. Fahrkartensystem nach Anspruch 1,
wobei der Server (400) dazu konfiguriert ist, die Zuverlässigkeit (419i) des Fahrgastes mit einem großen Subtraktionsbereich zu aktualisieren, wenn basierend auf einer abnormalen Fahrhistorie des Fahrgastes festgestellt wird, dass der Fahrgast ein schlechter Fahrgast ist.

6. Fahrkartensystem nach Anspruch 1,
wobei der Server (400) dazu konfiguriert ist, an ein Fahrkartenkontrollterminal empfohlene Fahrkartenkontrollpositionsinformationen einschließlich einer Zuverlässigkeit (419i) eines Fahrgastes zu übermitteln, der ein Fahrgastterminal (200) verwendet, das eine vorbestimmte Positionsbedingung erfüllt, und
das Fahrkartenkontrollterminal (300) dazu konfiguriert ist, die empfangenen empfohlenen Fahrkartenkontrollpositionsinformationen anzuzeigen.

7. Fahrkartensystem nach Anspruch 1,
wobei der Server (400) dazu konfiguriert ist, basierend auf einem Bewegungsmodus des Fahrgastterminals (200) während des Fahrzustandsübergangs zu ermitteln, ob die Kennung der von dem Fahrgastterminal (200) erfassten Positionsbake (101) und die Kennung des Fahrgastterminals (200) in Verbindung miteinander verwaltet werden sollen.

8. Fahrkartensystem nach Anspruch 8,
wobei das Fahrkartenkontrollterminal (300) dazu konfiguriert ist, eine Fahrkartenkontrollanfrage an das Fahrgastterminal (200) basierend auf der von dem Server übertragenen Informationen über den Fahrgast zu übermitteln, und
das Fahrgastterminal (200) dazu konfiguriert ist, wenn die Fahrkartenkontrollanfrage empfangen wird, den Fahrgast aufzufordern, auf die Fahrkartenkontrolle zu antworten, und einen Bildschirm anzuzeigen, der während der Fahrkartenkontrollanfrage bestimmt wird.

9. Fahrkartensystem nach Anspruch 1,
wobei die Positionsbake (101) im Inneren des sich bewegenden Körpers und in einer Station des sich bewegenden Körpers installiert ist, und
der Server (400) dazu konfiguriert ist, einen Zustand und einen Ort des Fahrgastterminals (200) unter Verwendung einer Kennung einer Positionsbake (101), die in dem sich bewegenden Körper installiert ist, und einer Kennung einer Positionsbake (101), die in der Station installiert ist, zu verwalten.

10. Verfahren zur Fahrkartenverwaltung, das von einem Fahrkartensystem ausgeführt wird, wobei das Fahrkartensystem umfasst:
eine Positionsbake (101), die in einem sich bewegenden Körper, auf dem ein Fahrgast fährt, installiert ist, ein Fahrgastterminal (200), das von einem Fahrgast verwendet wird, ein Fahrkartenkontrollterminal (300), das von einem Fahrkartenkontrollpersonal verwendet wird, und einen Server (400), der mit dem Fahrgastterminal (200) und dem Fahrkartenkontrollterminal verbunden ist,
wobei das Verfahren zur Fahrkartenverwaltung umfasst, dass:
die Positionsbake (101) durch das Fahrgastterminal erfasst wird;
wobei das Verfahren zur Fahrkartenverwaltung ferner umfasst, dass:
durch den Server (400) eine Fahrgastzuverlässigkeit (419i) und eine Fahrgastzuverlässigkeitsaktualisierungshistorie (416) eines Fahrgasts verwaltet wird;
durch den Server (400) eine Kennung der Positionsbake (101), die von dem Fahrgastterminal (200) erfasst wird, in Verbindung mit einer Kennung des Fahrgastterminals verwaltet wird;
durch den Server (400) ein Ort des Fahrkartenkontrollterminals (300) basierend auf einer Korrespondenzbeziehung zwischen der Kennung der Positionsbake (101), die in dem sich bewegenden Körper installiert ist, und der Kennung des Fahrkartenkontrollterminals verwaltet wird;
durch den Server (400) eine zeitliche Änderung eines Zustands und eines Ortes des Fahrgastterminals (200) als ein Fahrzustandsübergang basierend auf einer Korrespondenzbeziehung zwischen der Kennung der Positionsbake (101) und der Kennung des Fahrgastterminals verwaltet wird; und
durch den Server (400) die Zuverlässigkeit (419i) eines Fahrgastes, der ein Fahrgastterminal (200) nahe des Fahrkartenkontrollterminals (300) verwendet, basierend auf einer Position des Fahrkartenkontrollterminals (300) während des Fahrzustandsübergangs aktualisiert wird,
wobei der Server (400) auf die Fahrgastzuverlässigkeitsaktualisierungshistorie (419i) des Fahrgastes Bezug nimmt, Informationen über einen Fahrgast mit einer niedrigen Zuverlässigkeit (419i) unter den Fahrgästen, die mit dem sich bewegenden Körper fahren, sammelt und die gesammelten Informationen an das Fahrkartenkontrollterminal übermittelt.

## Revendications

1. Système de billet utilisé quand un passager se déplace dans un véhicule, le système de billet comprenant :
une balise de position (101) installée dans un corps mobile sur lequel se déplace un passager ;
un terminal de passager (200) utilisé par un passager ;
un terminal d'inspection de billet (300) utilisé par un personnel d'inspection de billet ; et
un serveur (400) connecté au terminal de passager (200) et au terminal d'inspection de billet, dans lequel
le terminal de passager (200) est configuré pour détecter la balise de position,
le serveur (400) est configuré pour
gérer une intégrité de passager (419i) et un historique de mise à jour d'intégrité de passager (416) d'un passager ;
gérer un identifiant de la balise de position (101) détectée par le terminal de passager (200) en association avec un identifiant du terminal de passager ;
gérer un emplacement du terminal d'inspection de billet (300) sur la base d'une relation de correspondance entre l'identifiant de la balise de position (101) installée dans le corps mobile et l'identifiant du terminal d'inspection de billet ;
gérer un changement temporel dans un état et un emplacement du terminal de passager (200) à titre de transition d'état de déplacement sur la base d'une relation de correspondance entre l'identifiant de la balise de position (101) et l'identifiant du terminal de passager ; et
mettre à jour ladite intégrité (419i) d'un passager qui utilise un terminal de passager (200) près du terminal d'inspection de billet (300) sur la base d'une position du terminal d'inspection de billet (300) pendant la transition d'état de déplacement,
dans lequel
le serveur (400) est configuré pour se référer audit historique de mise à jour d'intégrité de passager (416) du passager, pour collecter des informations d'un passager ayant une faible intégrité (419i) parmi des passagers se déplaçant sur le corps mobile, et pour transmettre les informations collectées au terminal d'inspection de billet.

2. Système de billet selon la revendication 1, dans lequel
le serveur (400) est configuré pour mettre à jour l'intégrité (419i) du passager sur la base d'une position du corps mobile pendant la transition d'état de déplacement.

3. Système de billet selon la revendication 1, dans lequel
le serveur (400) est configuré pour mettre à jour l'intégrité (419i) du passager sur la base d'un état de circulation du corps mobile pendant la transition d'état de déplacement.

4. Système de billet selon la revendication 1, dans lequel
le serveur (400) est configuré pour mettre à jour l'intégrité (419i) du passager avec une grande plage de soustraction quand il est déterminé que le passager se déplace fréquemment dans une section basée sur l'historique de déplacement du passager.

5. Système de billet selon la revendication 1, dans lequel
le serveur (400) est configuré pour mettre à jour l'intégrité (419i) du passager avec une grande plage de soustraction quand il est déterminé que le passager est un mauvais passager sur la base d'un historique de déplacement anormal du passager.

6. Système de billet selon la revendication 1, dans lequel
le serveur (400) est configuré pour transmettre, à un terminal d'inspection de billet, des informations de position d'inspection de billet recommandée incluant une intégrité (419i) d'un passager qui utilise un terminal de passager (200) satisfaisant une condition de position prédéterminée, et
le terminal d'inspection de billet (300) est configuré pour afficher les informations de position d'inspection de billet recommandée reçues.

7. Système de billet selon la revendication 1, dans lequel
le serveur (400) est configuré pour déterminer s'il faut gérer l'identifiant de la balise de position (101) détectée par le terminal de passager (200) et l'identifiant du terminal de passager (200) en association l'un avec l'autre, sur la base d'un mode de mouvement du terminal de passager (200) pendant la transition d'état de déplacement.

8. Système de billet selon la revendication 8, dans lequel
le terminal d'inspection de billet (300) est configuré pour transmettre une requête d'inspection de billet au terminal de passager (200) sur la base des informations du passager transmises depuis le serveur, et
le terminal de passager (200) est configuré pour, quand la requête d'inspection de billet est reçue, inviter le passager à répondre à une inspection de billet, et afficher un écran conçu pendant la requête d'inspection de billet.

9. Système de billet selon la revendication 1, dans lequel
la balise de position (101) est installée à l'intérieur du corps mobile et dans une station du corps mobile, et
le serveur (400) est configuré pour gérer un état un emplacement du terminal de passager (200) en utilisant un identifiant d'une balise de position (101) installée dans le corps mobile et un identifiant d'une balise de position (101) installée dans la station.

10. Procédé de gestion de billet exécuté par un système de billet,
le système de billet incluant une balise de position (101) installée dans un corps mobile sur lequel se déplace un passager, un terminal de passager (200) utilisé par un passager, un terminal d'inspection de billet (300) utilisé par un personnel d'inspection de billet, et un serveur (400) connecté au terminal de passager (200) et au terminal d'inspection de billet,
le procédé de gestion de billet comprenant l'étape consistant à :
détecter la balise de position (101) via le terminal de passager ;
le procédé de gestion de billet comprenant en outre les étapes consistant à :
gérer, via le serveur (400), une intégrité de passager (419i) et un historique de mise à jour d'intégrité de passager (416) d'un passager ;
gérer, via le serveur (400), un identifiant de la balise de position (101) détectée par le terminal de passager (200) en association avec un identifiant du terminal de passager ;
gérer, via le serveur (400), un emplacement du terminal d'inspection de billet (300) sur la base d'une relation de correspondance entre l'identifiant de la balise de position (101) installée dans le corps mobile et l'identifiant du terminal d'inspection de billet ;
gérer, via le serveur (400), un changement temporel dans un état et un emplacement du terminal de passager (200) à titre de transition d'état de déplacement sur la base d'une relation de correspondance entre l'identifiant de la balise de position (101) et l'identifiant du terminal de passager ; et
mettre à jour, via le serveur (400), l'intégrité (419i) d'un passager qui utilise un terminal de passager (200) près du terminal d'inspection de billet (300) sur la base d'une position du terminal d'inspection de billet (300) pendant la transition d'état de déplacement,
dans lequel
le serveur (400) se réfère audit historique de mise à jour d'intégrité de passager (416) du passager, collecte des informations d'un passager ayant une faible intégrité (419i) parmi des passagers se déplaçant sur le corps mobile, et transmet les informations collectées au terminal d'inspection de billet.
